(19) Europäisches Patentamt
European Patent Office
Office européen des brevets

(11) **EP 4 047 305 B1**

(12) **EUROPÄISCHE PATENTSCHRIFT**

(45) Veröffentlichungstag und Bekanntmachung des Hinweises auf die Patenterteilung:
**24.07.2024 Patentblatt 2024/30**

(21) Anmeldenummer: **22157891.7**

(22) Anmeldetag: **22.02.2022**

(51) Internationale Patentklassifikation (IPC):
**G01B 21/08** (2006.01)

(52) Gemeinsame Patentklassifikation (CPC):
**G01B 21/085; G01K 1/026; G01K 3/14; G01K 7/02; G01K 13/02**

(54) **GRENZSCHICHTSENSOR UND VERFAHREN ZUR ERFASSUNG DER DICKE EINER GRENZSCHICHT**

BOUNDARY LAYER SENSOR AND METHOD FOR DETECTING THE THICKNESS OF A BOUNDARY LAYER

CAPTEUR DE COUCHE LIMITE ET PROCÉDÉ DE DÉTECTION DE L'ÉPAISSEUR D'UNE COUCHE LIMITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2021 DE 102021201692**

(43) Veröffentlichungstag der Anmeldung:
**24.08.2022 Patentblatt 2022/34**

(73) Patentinhaber: **Fraunhofer-Gesellschaft zur Förderung**
**der angewandten Forschung e.V.**
**80686 München (DE)**

(72) Erfinder:
• **Mayer, Erhard**
**83607 Holzkirchen (DE)**
• **Visser, Michael**
**83626 Valley (DE)**
• **Simpson, John Cullen**
**83626 Valley (DE)**

(74) Vertreter: **Friese Goeden Patentanwälte PartGmbB**
**Widenmayerstraße 49**
**80538 München (DE)**

(56) Entgegenhaltungen:
**DE-A1- 102019 206 013     DE-U1- 202014 103 008**
**US-A- 5 281 025**

**Beschreibung**

Die Erfindung betrifft einen Grenzschichtsensor zur Bestimmung der Dicke einer Grenzschicht über einer Oberfläche eines umströmten Körpers mit einer ersten Einrichtung zur Bestimmung einer Temperatur, einer zweiten Einrichtung zur Bestimmung einer Temperatur und einer dritten Einrichtung zur Bestimmung einer Temperatur, welche jeweils in einem vorgebbaren Abstand zur Oberfläche des umströmten Körpers angeordnet sind. Weiterhin betrifft die Erfindung eine mit einem solchen Grenzschichtsensor ausgestattete Windenergieanlage, ein Fahrzeug, ein Flugzeug, ein Raumklimamessgerät oder ein Schiff. Schließlich betrifft die Erfindung ein Verfahren zur Erfassung der Dicke einer Grenzschicht über einer Oberfläche eines umströmten Körpers, bei welchem eine erste Temperatur, eine zweite Temperatur und eine dritte Temperatur jeweils in einem vorgebbaren Abstand zur Oberfläche des umströmten Körpers gemessen wird.

Aus der DE 10 2019 206 013 A1 ist ein Grenzschichtsensor bekannt, bei welchem drei Thermoelemente auf einer Leiterplatte bzw. einem Schaltungsträger angeordnet sind. Diese Leiterplatte wird auf einen Strömungskörper aufgebracht, welcher der zu vermessenden Strömung ausgesetzt wird. Diesem bekannten Sensor liegt die Erkenntnis zugrunde, dass der Temperaturverlauf innerhalb einer Grenzschicht einen exponentiellen Verlauf aufweist. Durch Bestimmung von drei Stützstellen kann somit der exponentielle Verlauf und daraus der Wärmeübergangskoeffizient und weitere Größen der Strömung bestimmt werden.

Dieser bekannte Sensor weist jedoch den Nachteil auf, dass die Anwesenheit des Strömungskörpers die Messung verfälscht bzw. rasch eintretende Änderungen im Strömungsverlauf nicht erfasst werden können. Es besteht daher ein Bedürfnis, die Dicke einer Grenzschicht über einer Oberfläche mit höherer Dynamik zu erfassen.

Die Aufgabe wird erfindungsgemäß durch eine Vorrichtung gemäß Anspruch 1, eine Windenergieanlage, ein Fahrzeug, ein Flugzeug, ein Raumklimamessgerät oder ein Schiff nach Anspruch 8 und ein Verfahren nach Anspruch 9 gelöst. Vorteilhafte Weiterbildungen der Erfindung finden sich in den Unteransprüchen.

Erfindungsgemäß wird ein Grenzschichtsensor und ein Verfahren zur Bestimmung der Dicke einer Grenzschicht über einer Oberfläche eines umströmten Körpers vorgeschlagen. Der Grenzschichtsensor weist zumindest drei Einrichtungen zur Bestimmung einer Temperatur auf, welche in unterschiedlichem Abstand zur Oberfläche des umströmten Körpers angeordnet sind. Unter dem Abstand wird für diese Zwecke der vorliegenden Beschreibung die Länge des Normalenvektors zwischen der jeweiligen Einrichtung zur Bestimmung der Temperatur und der Oberfläche bezeichnet.

Erfindungsgemäß wird weiter vorgeschlagen, dass zumindest die zweite und/oder die dritte Einrichtung zur Bestimmung einer Temperatur zumindest einen Draht enthalten oder daraus bestehen, welcher sich von der Oberfläche ausgehend in den an die Oberfläche angrenzenden Halbraum erstreckt. Erfindungsgemäß soll dieser Draht einen Durchmesser von etwa 300 µm oder weniger aufweisen. Ein solcher Draht weist eine gegenüber dem Strömungskörper gemäß dem Stand der Technik geringere Wärmekapazität auf. Daher können rasche Temperaturwechsel erfasst werden, sodass die zeitliche Auflösung des Grenzschichtsensors erhöht sein kann. Darüber hinaus wird eine Beeinträchtigung oder Veränderung der Strömung durch den Strömungskörper vermieden, so dass die die Grenzschichtdicke bzw. das Strömungsprofil an der Oberfläche mit größerer Genauigkeit erfasst werden kann.

Völlig überraschend wurde erkannt, dass die mechanische Stabilität eines frei auskragenden, dünnen Drahtes gleichwohl ausreichend ist, um die jeweiligen Abstände zur Oberfläche des umströmten Körpers einzuhalten. Es hat sich gezeigt, dass der vergleichsweise dünne Draht auch bei höheren Strömungsgeschwindigkeiten von beispielsweise mehr als 25 m/s oder mehr als 35 m/s oder mehr als 45 m/s nicht so weit verformt wird, dass sich die jeweiligen Abstände der zweiten und dritten Einrichtung zur Bestimmung einer Temperatur wesentlich ändern oder gar auf null reduzieren, sodass die Einrichtungen zur Bestimmung der Temperatur auf der Oberfläche anliegen würden. Damit ist auch der erfindungsgemäß vorgeschlagene Grenzschichtsensor in einem weiten Bereich der Strömungsgeschwindigkeit einsetzbar.

Erfindungsgemäß bestehen zumindest zwei Einrichtungen zur Bestimmung einer Temperatur jeweils aus einem Thermoelement, welche zumindest einen Draht aus einem ersten Material und zumindest einen Draht aus einem zweiten Material und eine den ersten und den zweiten Draht verbindende Kontaktstelle aufweisen. Da für die Ableitung der Strömungsgeschwindigkeit, des konvektiven Wärmeübergangskoeffizienten, der Scherkraft und der Grenzschichtdicke nur Temperaturdifferenzen zwischen den unterschiedlichen Einrichtungen zur Bestimmung der Temperatur erfasst werden müssen, kann die Auswertung der Thermospannungen dazu geeignet sein, die Grenzschichtdicke bzw. das Strömungsprofil an der Oberfläche in besonders einfacher Weise zu erfassen.

In einigen Ausführungsformen der Erfindung kann das erste und das zweite Material ausgewählt sein aus Cu bzw. CuNiMn. In einigen Ausführungsformen der Erfindung kann das erste und das zweite Material ausgewählt sein aus Cu bzw. CuNi. In einigen Ausführungsformen der Erfindung kann das erste und das zweite Material ausgewählt sein aus NiCr bzw. CuNi. In einigen Ausführungsformen der Erfindung kann das erste und das zweite Material ausgewählt sein aus Fe bzw. CuNi. In einigen Ausführungsformen der Erfindung kann das erste und das zweite Material ausgewählt sein aus Ni bzw. CrNi.

In einigen Ausführungsformen der Erfindung kann die erste und die zweite Einrichtung zur Bestimmung einer Temperatur einen ersten Draht aus einem ersten Material enthalten, welcher sich von der Oberfläche ausgehend in den an die Oberfläche angrenzenden Halbraum erstreckt. Weiterhin enthält die erste Einrichtung zur Bestimmung einer Temperatur einen zweiten Draht aus einem zweiten Material, welcher mit dem proximalen Ende des ersten Drahtes verbunden ist. Unter dem proximalen Ende des ersten Drahtes wird dabei dasjenige Ende verstanden, welches der Oberfläche des umströmten Körpers am nächsten ist. Die zweite Einrichtung zur Bestimmung einer Temperatur enthält sodann weiterhin einen dritten Draht aus dem zweiten Material, welcher den ersten Draht an einer Kontaktstelle entlang dessen Längserstreckung kontaktiert. Somit erfasst die erste Einrichtung zur Bestimmung einer Temperatur die Temperatur der Oberfläche und die zweite Einrichtung zur Bestimmung einer Temperatur erfasst eine Temperatur über der Oberfläche und innerhalb der Grenzschicht.

In einigen Ausführungsformen der Erfindung kann die Kontaktstelle der zweiten Einrichtung zur Bestimmung einer Temperatur entlang der Längserstreckung des ersten Drahtes etwa 1 mm bis etwa 3 mm oder etwa 2 mm von der Oberfläche entfernt sein.

In einigen Ausführungsformen der Erfindung enthält der Grenzschichtsensor weiterhin einen vierten Draht aus dem zweiten Material, welcher mit einem distalen Ende des ersten Drahtes verbunden ist. Die Kontaktstelle zwischen dem vierten Draht und dem ersten Draht bildet auf diese Weise die dritte Einrichtung zur Bestimmung einer Temperatur. Die dritte Einrichtung zur Bestimmung einer Temperatur kann somit dazu eingerichtet sein, eine Umgebungstemperatur zu erfassen. Hierzu kann sich der erste Draht und der vierte Draht ausgehend von der Oberfläche zwischen etwa 3 mm und etwa 10 mm in den an die Oberfläche angrenzenden Halbraum erstrecken. In anderen Ausführungsformen der Erfindung können sich der erste und vierte Draht von der Oberfläche ausgehend zwischen etwa 4 mm und etwa 6 mm in den an die Oberfläche angrenzenden Halbraum erstrecken. Der Fachmann wird die Länge des Grenzschichtsensors an die erwartete Grenzschichtdicke anpassen und so einerseits einen Sensor erhalten, welcher geringe Strömungswiderstände und hohe mechanische Stabilität aufweist und andererseits hohe Messgenauigkeit ermöglicht.

In einigen Ausführungsformen der Erfindung kann ein Ende des zweiten Drahtes und ein Ende des vierten Drahtes mit einer ersten Einrichtung zur Erfassung einer elektrischen Spannung verbunden sein. In einigen Ausführungsformen der Erfindung kann ein Ende des dritten Drahtes und ein Ende des vierten Drahtes mit einer zweiten Einrichtung zur Erfassung einer elektrischen Spannung verbunden sein. Auf diese Weise erfasst die erste Einrichtung eine elektrische Spannung, welche ein Maß für die Temperaturdifferenz zwischen der Oberflächentemperatur und der Umgebungstemperatur darstellt. Die zweite Einrichtung erfasst eine elektrische Spannung, welche eine Temperaturdifferenz zwischen der Umgebungstemperatur und der Temperatur an einem Ort innerhalb der Grenzschicht repräsentiert.

In einigen Ausführungsformen der Erfindung enthält der Grenzschichtsensor weiterhin eine Heizeinrichtung, welche dazu eingerichtet ist, die Oberfläche zu beheizen. Dies erlaubt es, den erfindungsgemäßen Grenzschichtsensor universell zur Messung von Strömungsgeschwindigkeit, konvektiven Wärmeübergangskoeffizienten, Scherkraft und der Grenzschichtdicke an der Oberfläche zu verwenden. Zusätzlich kann auch ein konvektiver Wärmestrom erfasst werden.

In einigen Ausführungsformen der Erfindung kann sich der zumindest eine Draht von der Oberfläche ausgehend unter einem Winkel von etwa 70° bis etwa 90° oder in einem Winkel von etwa 80° bis etwa 90° oder in etwa rechtwinklig in den an die Oberfläche angrenzenden Halbraum erstrecken. Unter einem Winkel von 90° zur Oberfläche soll dabei eine Ausrichtung verstanden werden, welche parallel zum Normalenvektor der Oberfläche verläuft. Hierdurch kann der Abstand der jeweiligen Einrichtung zur Bestimmung der Temperatur zur Oberfläche besonders einfach bestimmt werden, sodass die Auswertung erleichtert sein kann oder mit größerer Genauigkeit durchgeführt werden kann.

In einigen Ausführungsformen der Erfindung kann der Grenzschichtsensor mit einer Klebefolie an der Oberfläche befestigt sein. Dies erlaubt eine einfache und kostengünstige Montage, sodass der erfindungsgemäße Grenzschichtsensor auch für temporäre Messungen, beispielsweise in einem Strömungskanal, einsetzbar ist.

Erfindungsgemäß ragen der erste Draht und der dritte Draht und der optionale vierte Draht mit zumindest einem Längsabschnitt frei in den die Oberfläche umgebenden Halbraum hinein. Dies bedeutet, dass der erste Draht und der dritte Draht und der optionale vierte Draht in diesem Längsabschnitt nicht mit einer Stützstruktur in Kontakt stehen, wie beispielsweise einem Rohr, einem Strömungskörper oder einem Fachwerkträger. In einigen Ausführungsformen der Erfindung können die ersten, dritten und vierten Drähte mit dem gesamten Längsabschnitt, welcher nicht mit der Oberfläche in Kontakt steht, nicht mit einer Stützstruktur verbunden sein. Die frei auskragenden Drähte bzw. Teilabschnitte weisen daher eine geringe thermische Masse bzw. eine geringe Wärmekapazität auf, sodass die Ansprechgeschwindigkeit gegenüber bekannten Sensoren erhöht sein kann und die Geometrie der Oberfläche im Bereich der Messung nicht oder in geringerem Maß durch den Sensor gestört ist.

In einigen Ausführungsformen der Erfindung kann der erste, zweite, dritte und vierte Draht jeweils einen Durchmesser von etwa 50 μm bis etwa 250 μm aufweisen. In anderen Ausführungsformen der Erfindung kann der erste, zweite, dritte und vierte Draht jeweils einen Durchmesser von etwa 50 μm bis 150 μm aufweisen.

In wiederum anderen Ausführungsformen der Erfindung kann der erste, zweite, dritte und vierte Draht jeweils einen Durchmesser von etwa 75 $\mu$m bis etwa 125 $\mu$m oder von etwa 90 $\mu$m bis etwa 110 $\mu$m aufweisen. In einigen Ausführungsformen der Erfindung können die Drähte einen Durchmesser von etwa 100 $\mu$m aufweisen. Völlig überraschend wurde erkannt, dass auch sehr dünne Drähte bei hohen Strömungsgeschwindigkeiten von beispielsweise 15 m/s bis 50 m/s oder 25 m/s bis 45 m/s mechanisch stabil sind und durch die einwirkenden Kräfte nicht verformt werden. Gleichzeitig ist die Masse gering, sodass sich eine hohe Ansprechgeschwindigkeit ergibt.

Nachfolgend soll die Erfindung anhand eines Ausführungsbeispiels ohne Beschränkung des allgemeinen Erfindungsgedankens näher erläutert werden. Dabei zeigt

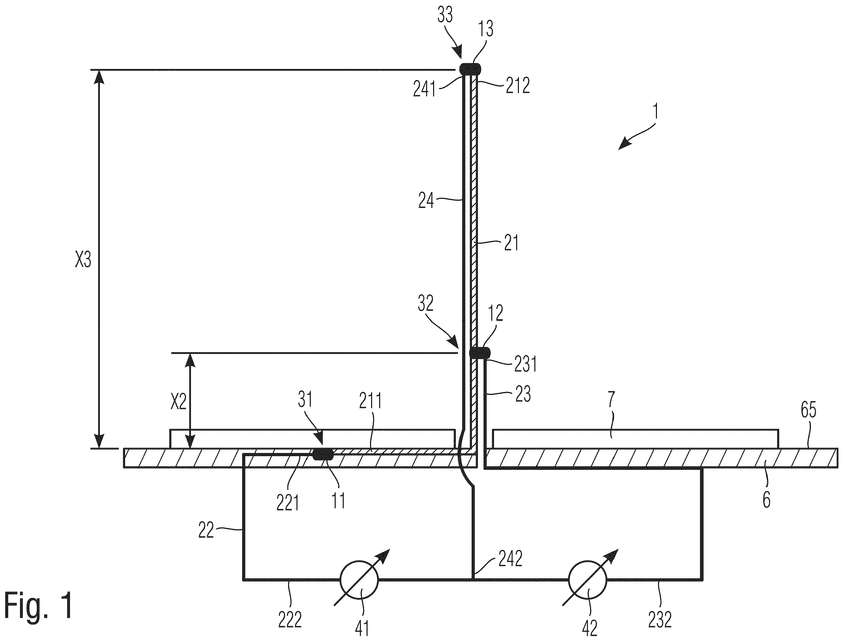

Figur 1      einen Querschnitt durch einen Grenzschichtsensor gemäß der vorliegenden Erfindung.

Figur 1 zeigt einen Querschnitt durch einen umströmten Körper 6 mit einer Oberfläche 65. Der Körper 6 kann beispielsweise Teil eines Fahr- oder Flugzeuges oder eines Schiffes sein. In anderen Ausführungsformen der Erfindung kann der Körper 6 Teil einer Windenergieanlage sein. In wiederum anderen Ausführungsformen der Erfindung kann der Körper 6 Teil eines Raumklimamessgerätes sein, welches den konvektiven Wärmeübergangskoeffizienten und/oder den Austausch von Strahlungswärme mit der Umgebung ermittelt. Bei Betrieb des Grenzschichtsensors wird der Körper 6 von einer erzwungener Strömung oder einer Konvektionsströmung umströmt, sodass sich in dem an die Oberfläche 65 anschließenden Halbraum des Körpers 6 eine Strömung ausbildet. Die Strömung kann zumindest teilweise parallel zum Körper 6 bzw. der Oberfläche 65 verlaufen.

Zur Erfassung der Dicke der Grenzschicht über der Oberfläche 65 wird erfindungsgemäß ein Grenzschichtsensor 1 eingesetzt. Der Grenzschichtsensor 1 ist dazu eingerichtet, drei Temperaturen bzw. zwei Temperaturdifferenzen zu erfassen. Hierzu weist der Grenzschichtsensor eine erste Einrichtung zur Erfassung einer Temperatur 31 auf, welche in einem ersten Abstand X1 zur Oberfläche 65 angeordnet ist. Im dargestellten Ausführungsbeispiel befindet sich die erste Einrichtung 31 zur Erfassung einer Temperatur unmittelbar auf der Oberfläche 65. Der Abstand X1 beträgt daher 0.

Weiterhin weist der Grenzschichtsensor 1 eine zweite Einrichtung 32 zur Erfassung einer Temperatur auf, welche in einem Abstand X2 über der Oberfläche 65 angeordnet ist. Der Abstand X2 kann beispielsweise zwischen etwa 1 mm bis etwa 3 mm betragen.

Schließlich weist der Grenzschichtsensor 1 eine dritte Einrichtung 33 zur Bestimmung einer Temperatur auf, welche in einem Abstand X3 über der Oberfläche 65 angeordnet ist. Der Abstand X3 kann beispielsweise zwischen etwa 3 mm und etwa 10 mm oder zwischen etwa 4 mm und etwa 6 mm betragen.

Bei Betrieb der Vorrichtung erfasst die erste Einrichtung 31 die Oberflächentemperatur $T_O$ der Oberfläche 65. Die dritte Einrichtung 33 erfasst eine Umgebungstemperatur $T_U$ außerhalb der Grenzschicht. Die zweite Einrichtung 32 erfasst eine Temperatur $T_X$ in einem Abstand X2 innerhalb der Grenzschicht. Die Grenzschichtdicke d ergibt sich somit aus:

$$d = \frac{X2}{\ln(T_O - T_U) - \ln(T_X - T_U)}, \qquad (1)$$

wobei d die Entfernung zur Oberfläche 65 angibt, in welcher die ungestörte Strömungsgeschwindigkeit in der Umgebung der Oberfläche 65 auf 1/e abgefallen ist, wobei e die Eulersche Zahl bezeichnet. Im dargestellten Ausführungsbeispiel sind die erste, zweite und dritte Einrichtung 31, 32 und 33 zur Erfassung jeweils einer Temperatur als Thermoelement ausgebildet.

Erfindungsgemäß wurde erkannt, dass für die Thermospannung $U_{T_O-T_U}$ gilt:

$$U_{T_O-T_U} = \frac{T_O - T_U}{const.} \qquad (2).$$

Durch Einsetzen von (2) in (1) ergibt sich die Grenzschichtdicke d zu

$$d = \frac{X2}{ln\left(U_{T_O-T_U}\right) - ln\left(U_{T_X-T_U}\right)} \qquad (3),$$

d.h. der Kalibrierfaktor in Gl. (2) ist unbeachtlich und die Grenzschichtdicke d ergibt sich in einfacher Weise durch Messung von zwei Thermospannungen und dem bekannten Abstand $X2$.

Hierzu weist der Sensor 1 einen ersten Draht 21 auf, welcher aus einem ersten Material besteht. Der erste Draht 21 weist ein proximales Ende 211 auf, welches auf der Oberfläche 65 anliegt. Das proximale Ende 11 ist mit dem ersten Ende 221 eines zweiten Drahtes 22 mittels einer Kontaktstelle 11 verbunden. Die Kontaktstelle 11 kann beispielsweise durch Punktschweißen erzeugt werden. Der zweite Draht 22 besteht aus einem zweiten Material, sodass sich an der Kontaktstelle 11 eine Thermospannung bildet, welche ein Maß für die Temperatur $T_O$ der Oberfläche 65 darstellt.

Der erste Draht 21 weist darüber hinaus ein distales Ende 212 auf, welches im Abstand X3 zur Oberfläche 65 angeordnet ist. Am distalen Ende 212 ist eine dritte Kontaktstelle 13 ausgebildet, an welcher das erste Ende 241 eines vierten Drahtes 24 mit dem distalen Ende 212 des ersten Drahtes verbunden ist. Der vierte Draht 24 besteht aus dem zweiten Material, sodass sich an der dritten Kontaktstelle 13 in gleicher Weise eine Thermospannung ausbildet. Das zweite Ende 222 des zweiten Drahtes und ein zweites Ende 224 des vierten Drahtes 24 sind mit einer ersten Einrichtung 41 zur Erfassung einer elektrischen Spannung verbunden. Die dort bestimmte elektrische Spannung $U_{TO-TU}$ ist somit ein Maß für die Temperaturdifferenz zwischen der ersten Einrichtung 31 zur Erfassung einer Temperatur und der dritten Einrichtung 33 zur Erfassung einer Temperatur.

Schließlich weist der Grenzschichtsensor 1 einen dritten Draht 23 auf, welcher mit seinem ersten Ende 231 an einer zweiten Kontaktstelle 12 entlang der Längserstreckung des ersten Drahtes 21 verbunden ist. Die zweite Kontaktstelle 12 befindet sich im Abstand X2 zur Oberfläche 65. Auch die zweite Kontaktstelle 12 kann beispielsweise durch Punktschweißen erzeugt werden. Auch der dritte Draht 23 besteht aus dem zweiten Material, welches vom ersten Material des ersten Drahtes 21 verschieden ist. Somit bildet sich auch an der zweiten Kontaktstelle 12 eine Thermospannung aus. Das zweite Ende 232 des dritten Drahtes 23 und das zweite Ende 242 des vierten Drahtes sind mit einer zweiten Einrichtung 42 zur Erfassung einer elektrischen Spannung verbunden. Die dort gemessene Spannung $U_{TX-TU}$ ist somit ein Maß für die Temperaturdifferenz zwischen der dritten Einrichtung 33 zur Erfassung einer Temperatur und der zweiten Einrichtung 32 zur Erfassung einer Temperatur. Aus den beiden gemessenen Temperaturdifferenzen lässt sich in einfacher Weise die Grenzschichtdicke bestimmen, wie vorstehend beschrieben wurde.

Wie in Figur 1 weiter ersichtlich ist, kann der erfindungsgemäße Grenzschichtsensor 1 in einfacher Weise mittels eines Klebebandes 7 auf der Oberfläche 65 befestigt werden. Hierdurch eignet sich der erfindungsgemäße Grenzschichtsensor auch zur temporären bzw. mobilen Anwendung, beispielsweise für Versuche in einem Strömungskanal. Darüber hinaus ermöglicht das Klebeband die Montage ohne Störung der Geometrie der Oberfläche.

Da der erste, zweite, dritte und vierte Draht 21, 22, 23 und 24 sehr dünn gewählt sein kann, sodass diese beispielsweise jeweils einen Durchmesser von etwa 75 $\mu$m bis etwa 125 $\mu$m aufweisen, ergibt sich einerseits ein geringer Strömungswiderstand und eine geringe Störung der Strömung und andererseits eine geringe thermische Masse, sodass der Grenzschichtsensor eine geringe Ansprechzeit aufweist. Somit können auch Strömungen vermessen werden, welche sich auf kurzer Zeitskala dynamisch verändern. Hierzu können der erste Draht (21), der dritte Draht (23) und der optionale vierte Draht (24) mit zumindest einem Längsabschnitt oder mit dem gesamten Längsabschnitt, welcher nicht mit der Oberfläche (65) in Kontakt steht, frei in den die Oberfläche (65) umgebenden Halbraum hineinragen. Dies bedeutet, dass der erste Draht, der dritte Draht und der optionale vierte Draht in diesem Längsabschnitt nicht mit einer Stützstruktur in Kontakt stehen, wie beispielsweise einem Rohr, einem Strömungskörper oder einem Fachwerkträger.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

Die Forschungsarbeiten, die zu diesen Ergebnissen geführt haben, wurden von der Europäischen Union gefördert.

## Patentansprüche

1. Grenzschichtsensor (1) zur Bestimmung der Dicke einer Grenzschicht über einer Oberfläche (65) eines umströmten Körpers (6) mit

   einer ersten Einrichtung zur Bestimmung einer Temperatur (31), einer zweiten Einrichtung zur Bestimmung einer Temperatur (32) und einer dritten Einrichtung zur Bestimmung einer Temperatur (33), welche jeweils in einem vorgebbaren Abstand (X1, X2, X3) zur Oberfläche (65) des umströmten Körpers (6) angeordnet sind, wobei zumindest die zweite und die dritte Einrichtung zur Bestimmung einer Temperatur (32, 33) aus jeweils einem Thermoelement bestehen, welche gebildet sind aus einem gemeinsamen ersten Draht (21) aus einem ersten Material und einem dritten und vierten Draht (23, 24) aus einem zweiten Material, welche an jeweils einer Kontaktstelle (12, 13) mit dem ersten Draht (21) verbunden sind,
   **dadurch gekennzeichnet, dass**
   die Drähte (21, 23, 24) jeweils frei in den an die Oberfläche angrenzenden Halbraum hineinragen und einen Durchmesser von etwa 300 $\mu$m oder weniger aufweisen.

2. Grenzschichtsensor nach Anspruch 1, weiterhin enthaltend einen zweiten Draht (22) aus dem zweiten Material, welcher mit einem proximalen Ende (211) des ersten Drahtes (21) an einer ersten Kontaktstelle (11) verbunden ist.

3. Grenzschichtsensor nach einem der Ansprüche 1 oder 2, **dadurch gekennzeichnet, dass** die zweite Kontaktstelle (12) zwischen dem dritten Draht (23) und dem ersten Draht (21) entlang der Längserstreckung des ersten Drahtes (21) etwa 1 mm bis etwa 3 mm oder etwa 2 mm von der Oberfläche (65) entfernt ist und/oder dass die dritte Kontaktstelle (13) zwischen dem vierten Draht (23) und dem ersten Draht (21) am distalen Ende (212) des ersten Drahtes (21) angeordnet ist.

4. Grenzschichtsensor nach einem der Ansprüche 2 oder 3, **dadurch gekennzeichnet, dass** ein Ende (222) des zweiten Drahtes (22) und ein Ende (242) des vierten Drahtes (24) mit einer ersten Einrichtung (41) zur Erfassung einer elektrischen Spannung verbunden sind und/oder dass ein Ende (232) des dritten Drahtes (23) und ein Ende (242) des vierten Drahtes (24) mit einer zweiten Einrichtung (42) zur Erfassung einer elektrischen Spannung verbunden sind.

5. Grenzschichtsensor nach einem der Ansprüche 1 bis 4, weiterhin enthaltend eine Heizeinrichtung, welche dazu eingerichtet ist, die Oberfläche (65) zu beheizen.

6. Grenzschichtsensor nach einem der Ansprüche 1 bis 5, **dadurch gekennzeichnet, dass** der erste Draht (21) sich von der Oberfläche (65) ausgehend zwischen etwa 3 mm und etwa 10 mm oder zwischen etwa 4 mm und etwa 6 mm in den an die Oberfläche angrenzenden Halbraum erstreckt und/oder

   dass sich die Drähte (21, 23, 24) von der Oberfläche (65) ausgehend unter einem Winkel von etwa 70° bis etwa 90° oder von etwa 80° bis etwa 90° oder in etwa rechtwinklig in den an die Oberfläche angrenzenden Halbraum erstrecken und/oder
   dass die ersten, dritten und vierten Drähte (21, 23, 24) zumindest mit dem Längsabschnitt, welcher nicht mit der Oberfläche (65) in Kontakt steht, nicht mit einer Stützstruktur verbunden sind.

7. Grenzschichtsensor nach einem der Ansprüche 2 bis 6, **dadurch gekennzeichnet, dass** der erste, zweite, dritte und vierte Draht (21, 22, 23, 24) jeweils einen Durchmesser von etwa 50 $\mu$m bis etwa 250 $\mu$m oder von etwa 50 $\mu$m bis etwa 150 $\mu$m oder von etwa 75 $\mu$m bis etwa 125 $\mu$m oder von etwa 90 $\mu$m bis etwa 110 $\mu$m oder etwa 100 $\mu$m aufweisen.

8. Windenergieanlage oder Fahrzeug oder Flugzeug oder Raumklimamessgerät oder Schiff mit einem Grenzschichtsensor nach einem der Ansprüche 1 bis 7.

9. Verfahren zur Erfassung der Dicke einer Grenzschicht über einer Oberfläche (65) eines umströmten Körpers (6), bei welchem eine erste Temperatur ($T_O$), eine zweite Temperatur ($T_x$) und eine dritte Temperatur ($T_U$) jeweils in einem vorgebbaren Abstand (X1, X2, X3) zur Oberfläche (65) des umströmten Körpers (6) gemessen wird, wobei zur Messung der Temperaturen ($T_O$, $T_X$, $T_U$) zumindest eine erste Einrichtung zur Bestimmung einer Temperatur (31) und eine zweite Einrichtung zur Bestimmung einer Temperatur (32) und eine dritte Einrichtung zur Bestimmung einer Temperatur (33) verwendet werden, wobei zumindest die zweite Einrichtung zur Bestimmung einer Temperatur (32) und die dritte Einrichtung zur Bestimmung einer Temperatur (33) aus jeweils einem Thermoelement bestehen, welche gebildet sind aus einem gemeinsamen ersten Draht (21) aus einem ersten Material und einem dritten und vierten Draht (23, 24) aus einem zweiten Material, welche an jeweils einer Kontaktstelle (12, 13) mit dem ersten Draht (21) verbunden sind **dadurch gekennzeichnet, dass**

   die Drähte (21, 23, 24) sich jeweils von der Oberfläche (65) ausgehend frei in den an die Oberfläche angrenzenden Halbraum erstrecken und einen Durchmesser von etwa 300 $\mu$m oder weniger aufweisen.

10. Verfahren nach Anspruch 9, **dadurch gekennzeichnet, dass** die erste Temperatur ($T_o$) mit einem Thermoelement gemessen wird, welches gebildet wird aus einem zweiten Draht (22) aus dem zweiten Material, welcher mit einem proximalen Ende (211) des ersten Drahtes (21) an einer ersten Kontaktstelle (11) verbunden ist.

11. Verfahren nach einem der Ansprüche 9 oder 10, **dadurch gekennzeichnet, dass** die dritte Temperatur ($T_U$) etwa 3 mm und etwa 10 mm oder zwischen etwa 4 mm und etwa 6 mm von der Oberfläche (65) entfernt gemessen wird.

12. Verfahren nach einem der Ansprüche 9 bis 11, **dadurch gekennzeichnet, dass** die zweite Temperatur ($T_x$) etwa 1 mm bis etwa 3 mm oder etwa 2 mm von der Oberfläche (65) entfernt gemessen wird.

13. Verfahren nach einem der Ansprüche 10 bis 12, **dadurch gekennzeichnet, dass** zwischen einem Ende (222) des zweiten Drahtes (22) und einem Ende (242) des vierten Drahtes (24) eine erste elektrische Spannung gemessen wird und/oder

    dass zwischen einem Ende (232) des dritten Drahtes (23) und einem Ende (242) des vierten Drahtes (24) eine zweite elektrische Spannung gemessen wird.

14. Verfahren nach einem der Ansprüche 9 bis 13, **dadurch gekennzeichnet, dass** die ersten, dritten und vierten Drähte (21, 23, 24) zumindest mit dem Längsabschnitt, welcher nicht mit der Oberfläche (65) in Kontakt steht, nicht mit einer Stützstruktur verbunden sind.

15. Verfahren nach einem der Ansprüche 11 bis 14, **dadurch gekennzeichnet, dass** der erste, zweite, dritte und vierte Draht (21, 22, 23, 24) einen Durchmes-

ser von etwa 50 $\mu$m bis etwa 250 $\mu$m oder von etwa 50 $\mu$m bis etwa 150 $\mu$m oder von etwa 75 $\mu$m bis etwa 125 $\mu$m oder von etwa 90 $\mu$m bis etwa 110 $\mu$m oder etwa 100 $\mu$m aufweisen.

**Claims**

1. Boundary layer sensor (1) for determining the thickness of a boundary layer above a surface (65) of a body (6) around which flow occurs, comprising

   a first device for determining a temperature (31), a second device for determining a temperature (32) and a third device for determining a temperature (33), which are each arranged at a predeterminable distance (X1, X2, X3) from the surface (65) of the body (6) around which flow occurs,
   at least each of the second and the third device for determining a temperature (32, 33) consisting of a thermocouple formed from a common first wire (21) made of a first material and a third and fourth wire (23, 24) made of a second material, each of which is connected to the first wire (21) at a contact point (12, 13),
   **characterized in that**
   each of the wires (21, 23, 24) projects freely into the half-space adjoining the surface and has a diameter of about 300 $\mu$m or less.

2. Boundary layer sensor according to claim 1, further comprising a second wire (22) made of the second material, which is connected to a proximal end (211) of the first wire (21) at a first contact point (11).

3. Boundary layer sensor according to any one of claims 1 or 2,

   **characterized in that** the second contact point (12) between the third wire (23) and the first wire (21) along the longitudinal extension of the first wire (21) is about 1 mm to about 3 mm or about 2 mm away from the surface (65) and/or
   **in that** the third contact point (13) between the fourth wire (23) and the first wire (21) is arranged on the distal end (212) of the first wire (21).

4. Boundary layer sensor according to any one of claims 2 or 3,

   **characterized in that** one end (222) of the second wire (22) and one end (242) of the fourth wire (24) are connected to a first device (41) for detecting an electrical voltage and/or
   **in that** one end (232) of the third wire (23) and one end (242) of the fourth wire (24) are connected to a second device (42) for detecting an electrical voltage.

5. Boundary layer sensor according to any one of claims 1 to 4, further comprising a heating device which is designed to heat the surface (65).

6. Boundary layer sensor according to any one of claims 1 to 5,

   **characterized in that** the first wire (21) extends from the surface (65) between about 3 mm and about 10 mm or between about 4 mm and about 6 mm into the half-space adjoining the surface and/or in that the wires (21, 23, 24) extend from the surface (65) at an angle of about 70° to about 90° or of about 80° to about 90° or approximately in rectangular fashion into the half-space adjoining the surface and/or
   **in that** the first, third and fourth wires (21, 23, 24) are not connected to a support structure, at least with the longitudinal portion that is not in contact with the surface (65).

7. Boundary layer sensor according to any one of claims 2 to 6, **characterized in that** each of the first, second, third and fourth wire (21, 22, 23, 24) has a diameter from about 50 $\mu$m to about 250 $\mu$m or from about 50 $\mu$m to about 150 $\mu$m or from about 75 $\mu$m to about 125 $\mu$m or from about 90 $\mu$m to about 110 $\mu$m or of about 100 $\mu$m.

8. Wind turbine system or vehicle or aircraft or room climate measuring device or ship having a boundary layer sensor according to any one of claims 1 to 7.

9. Method for detecting the thickness of a boundary layer above a surface (65) of a body (6) around which flow occurs, in which a first temperature ($T_O$), a second temperature ($T_X$) and a third temperature ($T_U$) are measured in each case at a predeterminable distance (X1, X2, X3) from the surface (65) of the body (6) around which flow occurs, at least a first device for determining a temperature (31) and a second device for determining a temperature (32) and a third device for determining a temperature (33) being used to measure the temperatures ($T_O$, $T_X$, $T_U$),

   at least the second device for determining a temperature (32) and the third device for determining a temperature (33) each consisting of a thermocouple formed from a common first wire (21) made of a first material and a third and fourth wire (23, 24) made of a second material, which are each connected to the first wire (21) at a contact point (12, 13)
   **characterized in that**
   each of the wires (21, 23, 24) extends freely from the surface (65) into the half-space adjoining the surface and has a diameter of about 300 μm or less.

10. Method according to claim 9, **characterized in that** the first temperature ($T_o$) is measured with a thermocouple formed from a second wire (22) made of the second material connected to a proximal end (211) of the first wire (21) at a first contact point (11).

11. Method according to any one of claims 9 or 10, **characterized in that** the third temperature (Tu) is measured about 3 mm and about 10 mm or between about 4 mm and about 6 mm away from the surface (65).

12. Method according to any one of claims 9 to 11, **characterized in that** the second temperature ($T_x$) is measured about 1 mm to about 3 mm or about 2 mm away from the surface (65).

13. Method according to any one of claims 10 to 12, **characterized in that** a first electrical voltage is measured between one end (222) of the second wire (22) and one end (242) of the fourth wire (24) and/or in that a second electrical voltage is measured between one end (232) of the third wire (23) and one end (242) of the fourth wire (24).

14. Method according to any one of claims 9 to 13, **characterized in that** the first, third and fourth wires (21, 23, 24) are not connected to a support structure, at least with the longitudinal portion that is not in contact with the surface (65).

15. Method according to any one of claims 11 to 14, **characterized in that** the first, second, third and fourth wires (21, 22, 23, 24) have a diameter from about 50 μm to about 250 μm or from about 50 μm to about 150 μm or from about 75 μm to about 125 μm or from about 90 μm to about 110 μm or of about 100 μm.

**Revendications**

1. Capteur de couche limite (1) pour déterminer l'épaisseur d'une couche limite au-dessus d'une surface (65) d'un corps (6) entouré d'un flux, comprenant

   un premier dispositif de détermination d'une température (31), un deuxième dispositif de détermination d'une température (32) et un troisième dispositif de détermination d'une température (33), qui sont disposés chacun à une distance prédéfinissable (X1, X2, X3) par rapport à la surface (65) du corps (6) entouré par le flux, dans lequel
   au moins les deuxième et troisième dispositifs de détermination d'une température (32, 33) sont constitués respectivement de thermocouples formés d'un premier fil commun (21) en un premier matériau et d'un troisième et d'un quatrième fil (23, 24) en un deuxième matériau, qui sont chacun reliés au premier fil (21) en un point de contact respectif (12, 13),
**caractérisé en ce que** les fils (21, 23, 24) s'étendent chacun librement jusque dans le demi-espace adjacent à la surface et présentent un diamètre d'environ 300 μm ou moins.

2. Capteur de couche limite selon la revendication 1, comprenant en outre un deuxième fil (22) en le deuxième matériau, qui est relié à une extrémité proximale (211) du premier fil (21) en un premier point de contact (11).

3. Capteur de couche limite selon l'une des revendications 1 ou 2,

   **caractérisé en ce que** le deuxième point de contact (12) entre le troisième fil (23) et le premier fil (21) est situé à une distance d'environ 1 mm à environ 3 mm ou d'environ 2 mm de la surface (65), le long de l'extension longitudinale du premier fil (21), et/ou
   **en ce que** le troisième point de contact (13) entre le quatrième fil (23) et le premier fil (21) est disposé à l'extrémité distale (212) du premier fil (21).

4. Capteur de couche limite selon l'une des revendications 2 ou 3,

   **caractérisé en ce qu'**une extrémité (222) du deuxième fil (22) et une extrémité (242) du quatrième fil (24) sont reliées à un premier dispositif (41) de détection d'une tension électrique, et/ou
   **en ce qu'**une extrémité (232) du troisième fil (23) et une extrémité (242) du quatrième fil (24) sont reliées à un deuxième dispositif (42) de détection d'une tension électrique.

5. Capteur de couche limite selon l'une des revendications 1 à 4, comprenant en outre un dispositif de chauffage conçu pour chauffer la surface (65).

6. Capteur de couche limite selon l'une des revendications 1 à 5,

   **caractérisé en ce que** le premier fil (21) s'étend, à partir de la surface (65), jusque dans le demi-espace, adjacent à la surface, sur une extension d'environ 3 mm à environ 10 mm ou d'environ 4 mm à environ 6 mm, et/ou
   **en ce que** les fils (21, 23, 24) s'étendent, à partir de la surface (65), jusque dans le demi-espace, adjacent à la surface, selon un angle compris entre environ 70° et environ 90° ou entre environ 80° et environ 90°, ou selon un angle approximativement droit, et/ou
**en ce que** les premier, troisième et quatrième fils (21, 23, 24) ne sont pas reliés à une structure de support, au moins sur le tronçon longitudinal qui n'est pas en contact avec la surface (65).

7.  Capteur de couche limite selon l'une des revendications 2 à 6,
    **caractérisé en ce que** les premier, deuxième, troisième et quatrième fils (21, 22, 23, 24) ont chacun un diamètre d'environ 50 μm à environ 250 μm, ou d'environ 50 μm à environ 150 μm, ou d'environ 75 μm à environ 125 μm, ou d'environ 90 μm à environ 110 μm, ou d'environ 100 μm.

8.  Eolienne ou véhicule ou avion ou appareil de mesure du climat ambiant ou navire, comportant un capteur de couche limite selon l'une des revendications 1 à 7.

9.  Procédé de détection de l'épaisseur d'une couche limite au-dessus d'une surface (65) d'un corps (6) entouré par un flux,

    dans lequel on mesure une première température ($T_O$), une deuxième température ($T_X$) et une troisième température ($T_U$) respectivement à une distance prédéfinissable (X1, X2, X3) par rapport à la surface (65) du corps (6) entouré par le flux,
    pour mesurer les températures ($T_O$, $T_X$, $T_U$), on utilise au moins un premier dispositif de détermination d'une température (31) et un deuxième dispositif de détermination d'une température (32) et un troisième dispositif de détermination d'une température (33),
    au moins le deuxième dispositif de détermination d'une température (32) et le troisième dispositif de détermination d'une température (33) sont constitués respectivement de thermocouples formés d'un premier fil commun (21) en un premier matériau et d'un troisième et d'un quatrième fil (23, 24) en un deuxième matériau, qui sont reliés chacun au premier fil (21) en un point de contact respectif (12, 13),
    **caractérisé en ce que**
    les fils (21, 23, 24) s'étendent chacun à partir de la surface (65) librement jusque dans le demi-espace adjacent à la surface et présentent un diamètre d'environ 300 μm ou moins.

10. Procédé selon la revendication 9,
    **caractérisé en ce que** la première température ($T_O$) est mesurée à l'aide d'un thermocouple formé d'un deuxième fil (22) en le deuxième matériau, qui est relié à une extrémité proximale (211) du premier fil (21) en un premier point de contact (11).

11. Procédé selon l'une des revendications 9 ou 10,
    **caractérisé en ce que** la troisième température ($T_U$) est mesurée à une distance comprise entre environ 3 mm et environ 10 mm ou entre environ 4 mm et environ 6 mm de la surface (65).

12. Procédé selon l'une des revendications 9 à 11,
    **caractérisé en ce que** la deuxième température ($T_X$) est mesurée à une distance d'environ 1 mm à environ 3 mm ou d'environ 2 mm de la surface (65).

13. Procédé selon l'une des revendications 10 à 12,

    **caractérisé en ce qu'**une première tension électrique est mesurée entre une extrémité (222) du deuxième fil (22) et une extrémité (242) du quatrième fil (24), et/ou
    **en ce qu'**une deuxième tension électrique est mesurée entre une extrémité (232) du troisième fil (23) et une extrémité (242) du quatrième fil (24).

14. Procédé selon l'une des revendications 9 à 13,
    **caractérisé en ce que** les premier, troisième et quatrième fils (21, 23, 24) ne sont pas reliés à une structure de support, au moins sur le tronçon longitudinal qui n'est pas en contact avec la surface (65).

15. Procédé selon l'une des revendications 11 à 14,
    **caractérisé en ce que** les premier, deuxième, troisième et quatrième fils (21, 22, 23, 24) ont un diamètre d'environ 50 μm à environ 250 μm, ou d'environ 50 μm à environ 150 μm, ou d'environ 75 μm à environ 125 μm, ou d'environ 90 μm à environ 110 μm, ou d'environ 100 μm.

Fig. 1

EP 4 047 305 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019206013 A1